# EUROPEAN PATENT APPLICATION

(11) **EP 1 835 430 A1**
(43) Date of publication of application: **19.09.2007**
(21) Application number: 07004069.6
(22) Date of filing: 27.02.2007
(51) Int. Cl.: G06F 21/00

(54) **User terminal and method of managing a secondary storage unit in a user terminal**

(30) Priority: 15.03.2006 JP 2006070962
(71) Applicant: HITACHI SOFTWARE ENGINEERING CO., LTD., Yokohama-shi, Kanagawa 230-0045 (JP)
(72) Inventor: Kirihata, Yasuhiro, 4-12-7 Higashishinagawa Tokyo 140-0002 (JP)
(74) Representative: Liesegang, Roland

(57) **Abstract**

In a user terminal having a feature to prevent the leakage or loss of classified information by inhibiting the writing in a secondary storage unit or out in an external recording medium, the user is allowed to update an OS patch, a virus pattern and the like as needed while preventing unauthorized activities. In a first step, a first control means provided in the user terminal causes a login mode selection screen to be displayed upon login to the user terminal, on which screen the user is asked to select either a write inhibit mode regarding the secondary storage unit or an update mode for updating an OS patch or the like. In a second step, a second control means provided in the user terminal causes, in response to a mode selection operation received in the first step, the secondary storage unit to be placed in a write inhibit state or an update allowed state, and then starts up the user terminal with the secondary storage unit placed in the write inhibit state or the update allowed state.

## Description

### BACKGROUND OF THE INVENTION

### 1. Field of the Invention

The present invention relates to a user terminal and a method of managing a secondary storage unit in the user terminal, such as a personal computer, having functions for write protection against the secondary storage unit and for write inhibition regarding external media. More particularly, the invention relates to a user terminal and a method of managing a secondary storage unit in the user terminal suitable for the updating of OS patches or applications.

### 2. Background Art

In a conventional method for controlling the outflow of classified data, when a classified file is stored in a secondary storage unit of a user terminal such as a personal computer, the file is encrypted, so that even if the file is taken out, the information stored therein is not leaked.

For example, in the technology disclosed in JP Patent Publication (Kokai) No. 11-149414 A (1999), an encryption/decryption process is automatically carried out by interrupting the file IO process in the OS (operating system), thereby offering a highly convenient automatic file encryption system. The system also controls access to a removable disc or a printer device so as to allow for the editing of classified file while preventing information leakage.

### SUMMARY OF THE INVENTION

However, there is a general atmosphere in society that does not permit the notion that because the classified files of customer information or the like are encrypted when stored in a portable information terminal such as a mobile PC, such classified information would not be leaked if the terminal were to be lost.

Namely, there is a strong need to block the storage of classified information in personal computers (PCs), particularly mobile PCs that could be more easily lost, while allowing for the viewing or utilization of such information. Such need cannot be addressed by the automatic file encryption system disclosed in the aforementioned document.

In normal operations, this need can be addressed by inhibiting the writing of data such as classified information in the secondary storage unit or out in an external medium such as a USB memory, and storing it instead on a file server.

However, when the system is thus constructed, operational problems may arise such as the inability to perform necessary updating work for an OS patch, a virus pattern file, or the like stored in the secondary storage unit.

It is therefore an object of the invention to provide a method of managing a secondary storage unit in a user terminal in which the writing of data in a secondary storage unit and out in an external medium is inhibited, and in which various data is stored in a non-volatile memory, wherein necessary updating operation such as updating an OS patch or a virus pattern file or the like in the secondary storage unit is allowed. It is another object of the invention to provide such user terminal.

In order to achieve the aforementioned objects, the invention provides a method of managing a secondary storage unit in a user terminal. The method comprises a first step wherein a first control means provided in the user terminal causes a login mode selection screen to be displayed upon-login to the user terminal, on which screen the user is asked to select either an a write inhibit mode regarding the secondary storage unit or an update mode for updating an OS patch or the like. The method also comprises a second step wherein a second control means provided in the user terminal, in response to the mode selection operation received in the first step, causes the secondary storage unit to be placed in a write inhibit state or an update allowed state, and then starts up the user terminal with the secondary storage unit placed in the write inhibit state or the update allowed state.

Preferably, in the second step, when the secondary storage unit is placed in the update allowed state, an icon or a menu item that is used for purposes other than updating a preset OS patch or the like is hidden from view.

Preferably, in the first step, a login mode selection screen is displayed on which an administrator's update mode can be selected in addition to the write inhibit mode and the update mode, and in the second step, upon selection of the administrator's update mode, the secondary storage unit is placed in the update allowed state, and an icon or a menu item that is used for purposes other than updating an OS patch or the like is displayed.

The invention also provides a user terminal that comprises a first control means for causing, upon login to the user terminal, a login mode selection screen to be displayed on which the user is asked to select either a write inhibit mode regarding the secondary storage unit or an update mode for updating an OS patch or the like. The user terminal also comprises a second control means for causing the secondary storage unit to be placed in a write inhibit state or an update allowed state, depending on the mode selection operation received by the first control means, and then starting up the user terminal with the secondary storage unit placed in the write inhibit state or the update allowed state.

Preferably, the second control means causes an icon or a menu item that is used for purposes other than updating a preset OS patch or the like to be hidden from view

Preferably, the first control means causes a login mode selection screen to be displayed on which an administrator's update mode can be selected in addition to the write inhibit mode and the update mode. The second control means, upon selection of the administrator's update mode, places the secondary storage unit in an update allowed state, and causes an icon or a menu item that is used for purposes other than updating an OS patch or the like to be displayed.

### Effects of the Invention

In accordance with the invention, upon login to a user terminal in which writing of data in a secondary storage unit and out in an external medium is inhibited, and in which various data is stored in a non-volatile memory, a login mode selection screen is displayed. If the write inhibit mode with respect to the secondary storage unit is selected by the user, the user terminal is started up with the secondary storage unit placed in the write inhibit state so that various data can be stored only in the volatile memory.

In this way, the data automatically erases itself upon turning off of power, thereby preventing the leakage of various data in case of loss of the user terminal.

If the update mode is selected, the user terminal is started up with the secondary storage unit placed in the write enabled state, so that an OS patch or the like can be updated. After the OS patch or the like is updated, the user terminal is rebooted in the write inhibit mode so that various data can be stored only in the volatile memory. In this way, an OS patch or the like can be updated and the leakage of various data can be prevented in case of loss of the user terminal.

In the update mode, icons or menu items used for processes other than an updating process for an OS patch or the like are hidden from view, thereby making it impossible to copy or carry data out of the secondary storage unit by the user without authorization. The hiding also makes it impossible to rewrite the data in the secondary storage unit by executing an unspecified application.

### BRIEF DESCRIPTION OF THE DRAWINGS

Fig. 1 shows a system block diagram of an embodiment of the invention.
Fig. 2 shows transitions of screen upon login in an update mode.
Fig. 3 shows a flowchart of the process in the GUI control module upon login.
Fig. 4 shows a flowchart of the process in the secondary storage unit write-control driver.
Fig 5 shows a flowchart of the process in the secondary storage unit write-control driver upon login.

### DESCRIPTION OF THE PREFERRED EMBODIMENTS

In the following, preferred embodiments of the invention will be described with reference to the drawings.

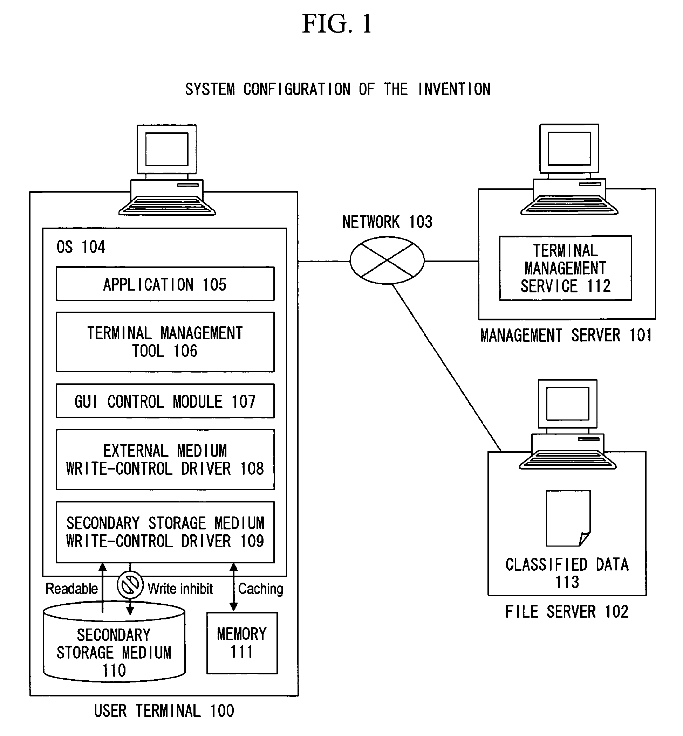

Fig. 1 shows a system block diagram of an embodiment of the invention.

The system according to the present embodiment is composed of a user terminal 100, management server 101, and a file server 102, which are all connected via a network 103.

The user terminal 100 consists of a portable or desktop PC (personal computer), which includes a volatile memory 111 and a non-volatile secondary storage unit 110. The user terminal is installed with an OS 104, an application 105, a terminal management tool 106, a GUI control module 107, an external medium write control module 108, and a secondary storage unit write-control driver 109.

The application 105 refers to not any particular application but any existing application. The user starts up OS 104 via the user terminal 100, and utilizes or edits a classified file on the file server 102 using the application 105. When the file is to be stored after use or edit, it is stored in the file server 102. When stored in the user terminal 100, the file data is merely cached in the volatile memory 111 by the secondary storage unit write-control driver 109 and not stored in the secondary storage unit 110.

Thus, the stored file data is erased when power is turned off.

The external medium write-control driver 108 controls the writing of data in an external medium such as a USB memory by inhibiting writing or enabling encrypted writing.

The GUI control module 107 is a module that is called upon login to OS 104. It causes a dialog to be displayed on the display screen upon initial login, offering three login modes to the user; namely, a write-protection mode, a normal update mode, and an administrator's update mode.

OS 104 is started up while desktop GUI is controlled on the basis of a selection of the login mode such that the write protection function of the secondary storage unit write-control driver 109 is switched on or off, or the user is permitted to carry out only necessary updates. The details of the GUI control will be described later.

The management server 101 runs a terminal management service program 112. The terminal management service program 112, in cooperation with the terminal management tool 106 of the user terminal 100 connected via the network 103, controls the external medium control driver 108 and the secondary storage unit write-control driver 109 of the user terminal 100 so as to control access to classified information in accordance with security policies.

For example, a policy can be set through the management server 101 such that a user having certain right A is inhibited from storing a file in the secondary storage unit 110 or writing it onto an external medium, while another user having right B is inhibited from storing a file in the secondary storage unit 110 but allowed to write it out in an external medium in an encrypted form.

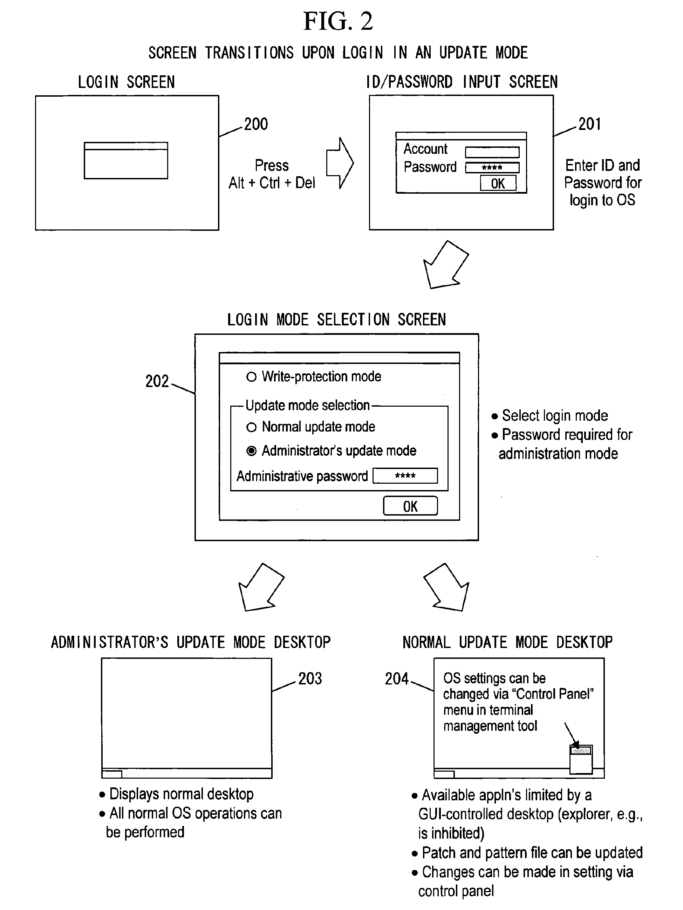

Fig. 2 shows how the screen transitions upon login in an update mode. In the illustrated example, OS 104 is Windows (registered trademark of Microsoft Corporation); this however is merely an example and it is also possible to realize similar screen transitions using other OS's.

Upon startup, OS 104 causes a display of a login screen 200. When the Alt, Ctrl, and Delete keys are pressed simultaneously on the keyboard, OS 104 causes the screen to transition to an ID/password input screen 201.

On the ID/password input screen 201, the user enters an OS login ID and password, and then presses the OK button on the displayed dialog, whereupon the screen moves to an authorization process. At the same time, the GUI control module 107 is called, and it is checked whether or not the login user has an administrative right to the user terminal 100. If the login user does not have an administrative right, OS 104 is started up normally. In this case, the write protection function of the secondary storage unit write-control driver 109 is not released, so that the file the user stores in the terminal 100 is not physically recorded in the secondary storage unit 110 and will be erased upon power-off.

If the login user has an administrative right, the screen transitions to a login mode selection screen 202, where the user is asked to select either a write-protection mode, a normal update mode, or an administrator update mode.

If the write-protection mode is selected, OS 104 is started up without the GUI control module 107 doing any processing. Thus, in this case, the write protection for the secondary storage unit 110 is enabled.

Of the update modes, if the administrator's update mode is selected, a further entry of an administrator password is requested; thus, in this mode, a user verification and access control different from those of usual login to OS 104 are added. Upon successful verification, the user is allowed to login in the administrator's update mode. In this mode, the operating environment is identical to the normal operating environment of OS 104, where storage in the secondary storage unit 110 is allowed and all updates can be freely made.

In the normal update mode, a login process is carried out after performing a desktop GUI control, which will be described below.

In one method of desktop GUI control by OS 104, the desktop icons are hidden from view in accordance with a change in group policy, various items in the start menu are erased, and the context menu in the start button is inhibited. Further, a white list of applications that can be run is set, access to volumes is inhibited, and access rights to desktop folders are modified.

In this way, the user is prevented from carrying out application startup operations using GUI and from storing files using the explorer. The white list allows only those processes used for OS patch update and virus pattern update. Thus, an environment is realized in which the user is only allowed to update OS patches and virus patterns via icons displayed in the task tray.

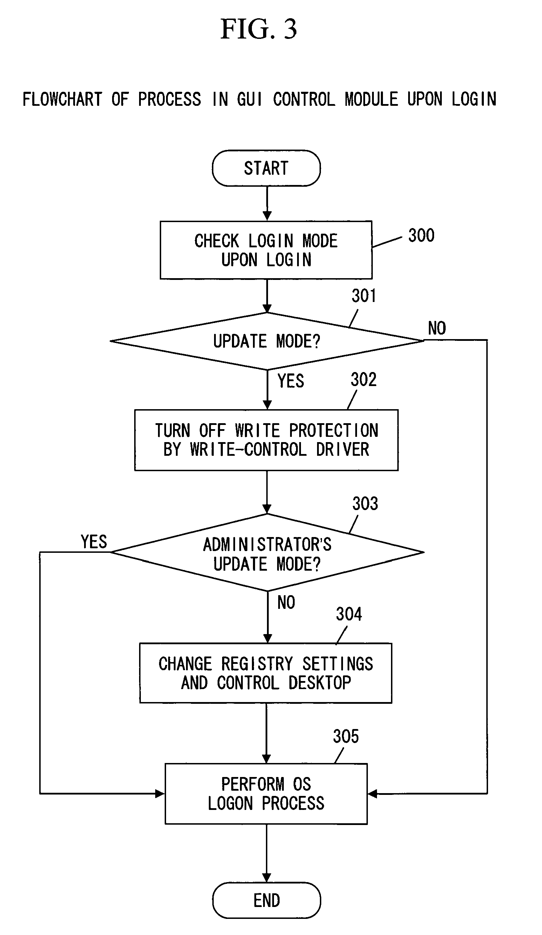

Fig. 3 shows a flowchart of the process performed by the GUI control module 107 upon login.

Upon booting of OS 104, the GUI control module 107 and the secondary storage unit write-control driver 109 are loaded. The secondary storage unit write-control driver 109 is loaded with the write protection activated. The GUI control module 107 then causes a login mode selection screen 202 to be displayed upon login by the user, on which the user is asked to select a login mode.

Upon selection of a mode on the login mode selection screen 202, the GUI control module 107 carries out a mode check (step 300). It is then checked if the login mode is an update mode (step 301); if not an update mode, namely, if it is a write-protection mode, the logon process is continued by OS 104 (step 305).

If it is an update mode, the write protection function of the secondary storage unit write-control driver 109 is turned off (step 306). As a result, writing of data in the secondary storage unit 110 in the update mode is allowed.

It is then checked if the login should be made in the administrator's update mode (step 303). If the login should be made in the administrator's update mode, the OS logon process is carried out (step 305). Thus, the user can utilize all of the functions of OS 104 normally and without any limitation, with the writing in the secondary storage unit 110 allowed.

If the login is not to be made in the administrator mode, namely, if it should be made in the normal update mode, the GUI control module 107 customizes the desktop GUI to inhibit access to the drive, thereby preventing unauthorized operations other than the updating of the OS patch or virus patterns by the user (step 304).

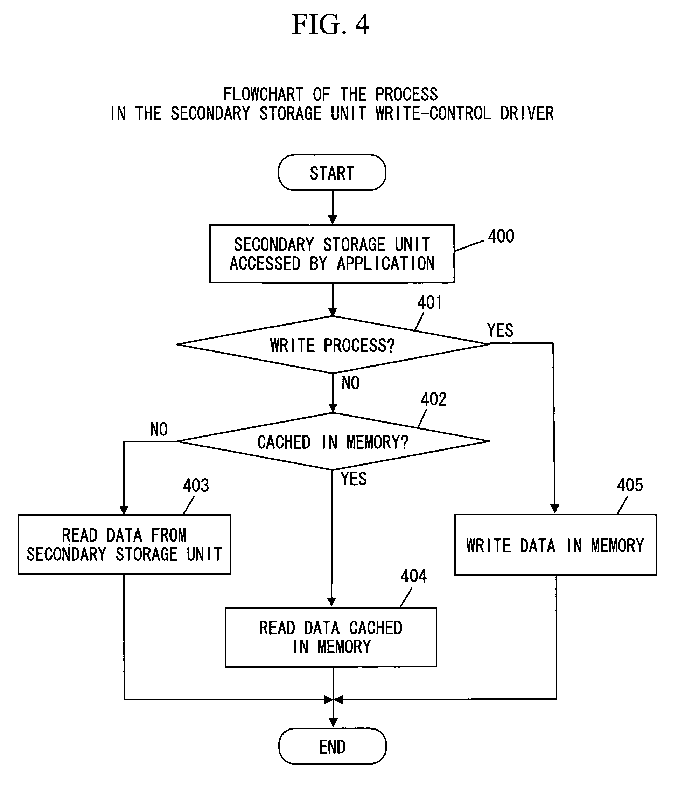

Fig. 4 shows a flowchart of the process performed by the secondary storage unit write-control driver 109.

When the application 105 accesses the secondary storage unit 110 (step 400), it is examined whether or not the process involves a write demand (step 401). If it does involve a write demand, the write data is cached in the volatile memory 111 (step 405).

If it involves a read demand, the cache list in the memory 111 is searched to see if the data to be read is already partially cached in the memory 111 (step 402). If it is cached, the data in the cache is read and merged with the data read from the secondary storage unit 110, and then the process is returned to the upper kernel module of OS 104 (step 404).

If it is not cached, the data is read from the secondary storage unit 110 and the process is simply returned to the upper kernel module of OS 104 (step 403).

Through this process, the write data for the secondary storage unit 110 is merely cached in the volatile memory 111 and not physically written in the secondary storage unit 110.

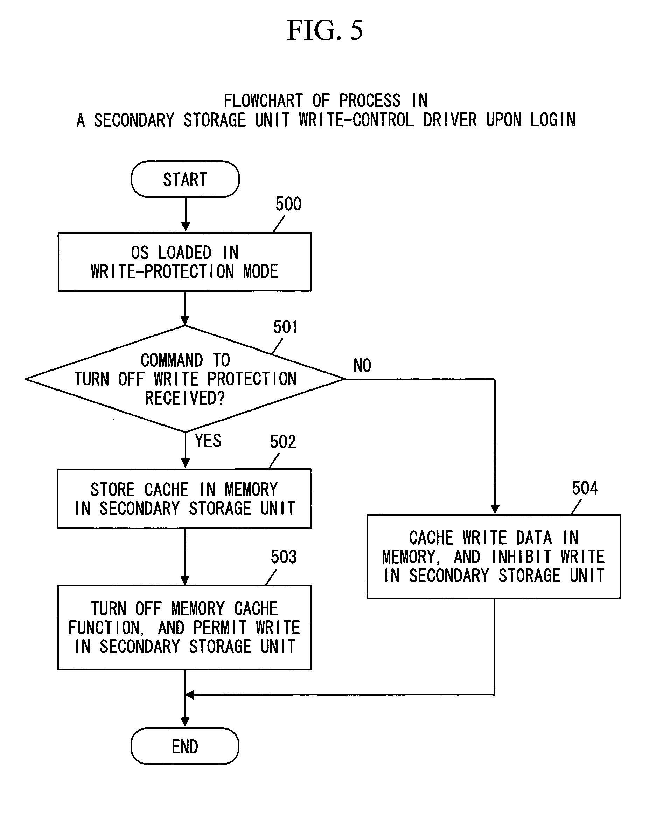

Fig. 5 shows a flowchart of the process performed by the secondary storage unit write-control driver 109 upon login.

The secondary storage unit write-control driver 109, when loaded in OS 104, is loaded in the write-protection mode by default (step 500). The login mode selection is made upon login by the user, and then either the write-protection mode or an update mode is selected. The GUI control module 107 then checks to see if the write protection is off. If the write protection is off, a command is sent to the secondary storage unit write-control driver 109. The secondary storage unit write-control driver 109 checks to see if it has received the command (step 501). If not, the write-protection mode becomes valid, and, after login, the write data is cached in the memory 111 while writing in the secondary storage unit 110 is inhibited (step 504). If the control driver has received the command, the cache data that currently exists in the memory 111 is stored in the secondary storage unit 110 (step 502), and then the memory cache function is turned off, thereby enabling writing in the secondary storage unit 110 (step 503).

In this way, consistency between the cache data and the subsequently written data can be maintained.

The GUI control module and the secondary storage unit write-control driver can be provided as computer executable programs that can be utilized on the user terminal.

## Claims

1. A method of managing a secondary storage unit in a user terminal in which writing of data in the secondary storage unit and out in an external medium is inhibited, and various data is stored in a non-volatile memory, the method comprising:
a first step wherein a first control means provided in the user terminal causes a login mode selection screen to be displayed upon login to the user terminal, on which screen the user is asked to select either a write inhibit mode regarding the secondary storage unit or an update mode for updating an OS patch or the like; and
a second step wherein a second control means provided in the user terminal causes the secondary storage unit to be placed in a write inhibit state or an update allowed state, depending on the mode selection operation received in the first step, and then starts up the user terminal with the secondary storage unit placed in the write inhibit state or the update allowed state.

2. The method of managing a secondary storage unit in a user terminal according to claim 1, wherein in the second step, when the secondary storage unit is placed in the update allowed state, an icon or a menu item that is used for purposes other than updating a preset OS patch or the like is hidden from view.

3. The method of managing a secondary storage unit in a user terminal according to claim 1, wherein in the first step, a login mode selection screen is displayed on which an administrator's update mode can be selected in addition to the write inhibit mode and the update mode, and wherein in the second step, upon selection of the administrator's update mode, the secondary storage unit is placed in the update allowed state, and an icon or a menu item that is used for purposes other than updating an OS patch or the like is displayed.

4. A user terminal in which writing of data in a secondary storage unit and out in an external medium is inhibited, and various data is stored in a non-volatile memory, the user terminal comprising:
a first control means for causing a login mode selection screen to be displayed upon login to the user terminal, on which screen the user is asked to select either a write inhibit mode regarding the secondary storage unit or an update mode for updating an OS patch or the like; and
a second control means for causing the secondary storage unit to be placed in a write inhibit state or an update allowed state, depending on the mode selection operation received by the first control means, and then starting up the user terminal with the secondary storage unit placed in the write inhibit state or the update allowed state.

5. The user terminal according to claim 4, wherein the second control means causes an icon or a menu item that is used for purposes other than updating a preset OS patch or the like to be hidden from view in the update allowed state.

6. The user terminal according to claim 5, wherein the first control means causes a login mode selection screen to be displayed on which an administrator's update mode can be selected in addition to the write inhibit mode and the update mode, wherein the second control means, upon selection of the administrator's update mode, causes the secondary storage unit to be placed in an update allowed state, and causes an icon or a menu item that is used for purposes other than updating an OS patch or the like to be displayed.
